## Europäisches Patentamt

## European Patent Office

## Office européen des brevets

(19)

(11) Veröffentlichungsnummer: **0 121 755**
**B1**

(12) # EUROPÄISCHE PATENTSCHRIFT

(45) Veröffentlichungstag der Patentschrift:
**27.12.89**

(51) Int. Cl.⁴: **C 08 F 10/02**, C 08 F 4/34

(21) Anmeldenummer: **84102358.3**

(22) Anmeldetag: **05.03.84**

(54) **Verfahren zur Herstellung von Ethylenpolymerisaten bei Drücken oberhalb von 500 bar in einem Zweizonen-Rohrreaktor.**

(30) Priorität: **12.03.83 DE 3308804**

(43) Veröffentlichungstag der Anmeldung:
**17.10.84 Patentblatt 84/42**

(45) Bekanntmachung des Hinweises auf die Patenterteilung:
**27.12.89 Patentblatt 89/52**

(84) Benannte Vertragsstaaten:
**AT BE DE FR GB NL**

(56) Entgegenhaltungen:
**DE-A-2 558 266**
**FR-A-2 018 538**
**FR-A-2 335 531**
**GB-A-934 444**

(73) Patentinhaber: **BASF Aktiengesellschaft, Carl-Bosch- Strasse 38, D-6700 Ludwigshafen (DE)**

(72) Erfinder: **Brandstetter, Franz, Dr., Ritterbueschel 45, D-6730 Neustadt (DE)**
Erfinder: **Werner, Michael, Dr., c/o Pharma Natura P.O. Box 5502, 2000 Johannesburg (ZA)**
Erfinder: **Ziegler, Walter, Dr., Starenweg 15, D-6803 Edingen- Neckarhausen (DE)**

EP 0 121 755 B1

## Beschreibung

Die Erfindung betrifft ein Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Drücken von 500 bis 5000 bar und Temperaturen von 40 bis 450°C in Gegenwart von radikalisch zerfallenden Polymerisationsinitiatoren, indem man dem Polymerisationssystem an dessen Einlaßstelle (A) ein Gemisch aus Ethylen, Sauerstoff, tert.-Butylperoxipivalat, gegebenenfalls Regler und gegebenenfalls Comonomer und gleichzeitig an einer zweiten Stelle (B) hinter der Einlaßstelle entlang des Polymerisationssystems, an der die Temperatur der Polymerisationsreaktion bereits das Maximum überschritten hat, ein Gemisch aus Ethylen, Sauerstoff, gegebenenfalls Regler und gegebenenfalls Comonomere zuführt.

Bei derartigen Verfahren sind Maßnahmen erforderlich, die Eigenschaften der durch Hochdruckpolymerisation entstehenden Ethylenpolymerisate durch Veränderung der Polymerisationsbedingungen zu variieren. Hierzu können in kontinuierlich arbeitenden Rohrreaktoren z. B. die Zuführbedingungen der Polymerisationsinitiatoren geändert werden.

Es ist bekannt, daß man Ethylen in rohrförmigen Polymerisationssystemen bei Drücken von 500 bis 5000 bar und Temperaturen von 50 bis 450°C in Gegenwart von radikalisch zerfallenden Polymerisationsinitiatoren, wie Sauerstoff oder peroxidischen Initiatoren, gegebenenfalls in Gegenwart von Reglern und Anwesenheit von Coreaktanten polymerisieren kann. Es ist auch bekannt, daß man bei der Hochdruckpolymerisation von Ethylen in rohrförmigen Reaktoren an mehreren in der Strömungsrichtung des Ethylens hintereinanderliegenden Stellen Katalysatoren der genannten Art in gelöster oder suspendierter Form in den Reaktor einleiten kann (vgl. GB-PS-1 010 847). Bei diesem Verfahren kann jedoch die Temperatur im Reaktor nicht zuverlässig über längere Zeit kontrolliert werden, was zum Verkohlen des Reaktionsgemisches und zum Verstopfen des Reaktors führt.

Man hat auch schon bei der Hochdruckpolymerisation von Ethylen den die Katalysatoren enthaltenden Ethylenstrom in mehrere Teilströme aufgeteilt und dann einen dieser Teilströme nach dem Erwärmen auf Anspringtemperatur in den Anfang eines röhrenförmigen Reaktors eingeleitet. Der andere, beziehungsweise die anderen Teilströme werden dann bei diesen bekannten Verfahren kalt an mehreren in Strömungsrichtung des polymerisierenden Ethylens hintereinanderliegenden Stellen des Reaktors zugeführt. Das kalte Ethylen wird dabei üblicherweise an den Stellen des Reaktors eingeleitet, an denen das Polymerisationsgemisch im Reaktor etwa die maximal zulässige Polymerisationstemperatur erreicht hat. Dabei wird die Menge des kalt eingeleiteten Ethylens, welches den Initiator enthält, so bemessen, daß die Temperatur des Reaktionsgemisches im Reaktor nicht unter die Anspringtemperatur der Ethylenpolymerisation, die von dem verwendeten Katalysator abhängt, sinkt. Auf diese Weise ist es unter besonderen Bedingungen möglich, den Umsatz des Ethylens zu Polyethylen pro Durchsatz zu erhöhen. Bei diesem Verfahren werden dem Ethylen vor oder nach der Komprimierung geringe Mengen Luftsauerstoff als Polymerisationsinitiator zugegeben. Auch können statt Luftsauerstoff organische Peroxide oder Hydroperoxide oder Mischungen von Peroxidverbindungen zugeführt werden (vgl. US-PS-3 725 378).

Man kann auch Ethylenpolymerisate beziehungsweise Copolymerisate von Ethylen mit ethylencopolymerisierbaren Verbindungen in einem kontinuierlich betriebenen, rohrförmigen Polymerisationssystem dadurch herstellen, daß man im Polymerisationssystem an dessen Einsatzstelle (A) und gleichzeitig an einer zweiten Stelle (C) hinter der Einlaßstelle entlang des Polymerisationssystems, wo die Reaktionstemperatur ein Maximum überschritten hat, ein Gemisch aus Ethylen, Sauerstoff, Regler und gegebenenfalls Comonomere zuführt, wobei man zusätzlich an einer weiteren Stelle (B) des Reaktors, an der die Temperatur der sauerstoffinitiierten Reaktion bereits das Maximum überschritten hat, und die zwischen den Einlaßstellen (A) und (C) liegt, einen Initiator, z. B. Methylisobutylketonperoxid, zudosiert, dessen Halbwertstemperatur, gemessen in Benzol als Lösungsmittel, über 140°C liegt (vgl. DE-OS-3 141 507). Hierbei wird zwar ein höherer Umsatz des Ethylens zu Polyethylen erhalten, für manche Anwendungsbereiche sind aber die optischen Folieneigenschaften, das Schweißverhalten und die Ausziehfähigkeit der Polyethylenfolien noch ungenügend. Aus wirtschaftlichen Gründen ist es auch erstrebenswert, den Umsatz des Ethylens zu Polyethylen noch weiter zu erhöhen.

Der vorliegenden Erfindung liegt die Aufgabe zugrunde, ein verbessertes Ethylenhochdruckpolymerisationsverfahren der eingangs beschriebenen Art aufzufinden, bei dem in höherer Ausbeute Ethylenpolymerisate mit guten optischen Folieneigenschaften und guter Ausziehfähigkeit der Folien erhalten werden.

Diese Aufgaben werden erfindungsgemäß dadurch gelöst, daß man im eingangs beschriebenen Verfahren zusätzlich an einer weiteren Stelle (C) des Polymerisationssystems, an der die Temperatur der sauerstoffinitiierten Reaktion bereits das Maximum überschritten hat, und die zwischen der zweiten Einlaßstelle (B) und dem Ende des Polymerisationssystems liegt, einen organischen Initiator zufügt, dessen Halbwertstemperatur, gemessen in Benzol als Lösungsmittel, über 140°C liegt. Bevorzugt wird an der Zuführstelle (C) Methylisobutylketonperoxid zudosiert. ·

Das Verfahren ist bevorzugt auf die Homopolymerisation von Ethylen aber auch auf die Copolymerisation des Ethylens mit anderen ethylencopolymerisierbaren Verbindungen anwendbar. Als solche kommen alle die Verbindungen in Frage, die üblicherweise unter Hochdruckbedingungen mit Ethylen in Gegenwart von Radikale bildenden Polymerisationsinitiatoren copolymerisiert werden können. Solche Verbindungen sind z. B. Vinylacetat, n-Butylacrylat, Methylacrylat, Acrylnitril, Vinylether, Acrylsäure oder Acrylamid, wobei der Anteil an Comonomeren im Copolymerisat maximal 20 Gew.-% betragen sollte. Bevorzugt sind Copolymerisate mit einem Comonomeranteil im Copolymerisat von maximal 10 Gew.-%.

Die Polymerisation des Ethylens, gegebenenfalls zusammen mit anderen Verbindungen, erfolgt bei Drücken von 1500 bis 3000 bar. Die Temperaturen im Polymerisationssystem betrage von 140 bis 350°C. Die mittleren Verweilzeiten betragen üblicherweise 30 bis 120 Sekunden. Dabei ist die mittlere Verweilzeit definiert durch das Verhältnis des Apparatevolumens zu dem im Mittel pro Zeiteinheit durch das Apparatevolumen hindurchgetretenen Produktvolumens. Die Bedingungen im Polymerisationssystem lassen sich apparativ in sogenannten Rohrreaktoren einstellen. Unter Rohrreaktoren versteht man rohrförmige Polymerisationsgefäße, deren Längenausdehnung das über 2000 fache, bevorzugt das 5000- bis 50 000 fache des Rohrdurchmessers beträgt. Wie üblich, wird ein Teil der Polymerisationswärme durch Kühlung des Rohrreaktors von außen mit Wasser abgeführt. Die Polymerisation des Ethylens beziehungsweise des Ethylens mit Comonomeren im Rohrreaktor wird kontinuierlich betrieben (vgl. "Ullmann's Encyklopädie der technischen Chemie", Verlag Chemie GmbH, D-6940 Weinheim, Band 19, (1980), Seiten 169 bis 195).

Die Polymerisation des Ethylens gemäß vorliegendem Verfahren wird anfänglich durch Zufuhr von Luftsauerstoff und tert.-Butylperoxipivalat initiiert, wobei die Sauerstoffkonzentration 0,5 bis 50 mol ppm, bezogen auf die Menge an Ethylen, beträgt. Das Gemisch aus Ethylen, Sauerstoff und tert.-Butylperoxipivalat, das gegebenenfalls Regler und Comonomere enthalten kann, wird an der Einlaßstelle dem Reaktor zugeführt. Unter Einlaßstelle wird im allgemeinen der Anfang des rohrförmigen Reaktors verstanden, wobei es sich bei dem erfindungsgemäß zu verwendenden rohrförmigen Reaktor um einen Zweizonen-Rohrreaktor handelt.

Die Konzentration an tert.-Butylperpivalat, das in einem inerten Lösungsmittel gelöst ist und an der Einlaßstelle zudosiert wird, beträgt 5 bis 15 mol ppm, bezogen auf die gesamte, dem Polymerisationssystem an dessen Einlaßstelle (A) zugeführte Menge Ethylen.

Mittels üblicher Regler, zum Beispiel Kohlenwasserstoffe wie Propan, Propen usw., Ketone wie Aceton, Methylethylketon usw. oder Aldehyde wie Propionaldehyd kann das Molekulargewicht des anfallenden Polymerisats auf den gewünschten Wert gebracht werden.

In dem anmeldungsgemäßen Verfahren wird dem Polymerisationssystem gleichzeitig an einer zweiten Stelle (B) hinter der Einlaßstelle entlang des Rohrreaktors, an der die Temperatur des Polymerisationsgemisches bereits das Maximum überschritten hat, ein Gemisch aus Ethylen, 0,5 bis 100, bevorzugt 0,5 bis 50 mol ppm Sauerstoff, bezogen auf die Menge Ethylen, das gegebenenfalls Regler und Comonomere enthalten kann, zugeführt. Entsprechend dem in der US-PS-3 725 378 beschriebenen Verfahren wird dabei der Hauptstrom des Ethylen-Sauerstoff-Gemischs an der Einlaßstelle (A) dem Rohrreaktor zugegeben und der Nebenstrom an der zweiten Zuführstelle (B). Durch diese Maßnahme wird die Reaktionsführung des bekannten Zweizonen-Rohrreaktors erhalten.

In dem erfindungsgemäß verbesserten Verfahren wird nun an einer weiteren Reaktorstelle (C), an der das Temperaturmaximum der sauerstoffinitiierten Reaktion bereits überschritten ist und die zwischen der zweiten Einlaßstelle (B) und dem Ende des Polymerisationssystems, d.h. am Ende des rohrförmigen Reaktors liegt, ein organischer Initiator, der in einem inerten Lösungsmittel gelöst ist, zugeführt, wobei dessen Halbwertstemperatur, gemessen in Benzol als Lösungsmittel, über 140°C liegt. Bevorzugt ist das organische Peroxid Methylisobutylketonperoxid. Die Halbwertstemperatur ist definiert als diejenige Temperatur, bei welcher der in Benzol gelöste Initiator in einer Minute zur Hälfte zerfällt (vgl. US-PS-3 835 107 und US-PS-3 293 233). Beispiele für geeignete Initiatoren sind Diisopropylbenzolhydroperoxid, Di-tert.-butylperoxid, Cumolhydroperoxid, Tert.-butylperisononat, Methylisobutylketonperoxid.

Als geeignetes inertes Lösungsmittel für das tert.-Butylperpivalat und das Peroxid an der Zuführstelle (C), z. B. das Methylisobutylketonperoxid werden zweckmäßig aliphatische Kohlenwasserstoffe wie Oktan oder Benzin verwendet. Es können gegebenenfalls auch andere inerte Lösungsmittel, wie Chlorbenzol, Cyclohexan oder Methanol, eingesetzt werden. Die für das Zuführen der Initiatoren erforderlichen Mengen an Lösungsmittel sind im Verhältnis zur Menge Ethylen gering und betragen im allgemeinen jeweils 0,01 bis 5 Gew.-%, vorzugsweise 0,1 bis 2 Gew.-%, bezogen auf die Menge Reaktionsgas. Die Initiatoren enthaltende Lösung wird dabei an den oben angegebenen Stellen im Reaktionsgemisch dosiert bzw. gegebenenfalls mit Hilfe von schnellaufenden Dosierpumpen direkt in das Reaktionsgemisch zudosiert (vgl. DE-OS-3 227 746).

Es ist ein Vorteil des erfindungsgemäßen Verfahrens, daß bei verbessertem Umsatz des Ethylens ein Ethylenpolymerisat der Dichte 0,910 bis 0,935, vorzugsweise 0,915 bis 0.925 g/cm$^3$ (DIN 53 479) erhalten werden kann, das zu hohen optischen Folieneigenschaften und guter Ausziehfähigkeit der daraus hergestellten Folien führt.

In den folgenden Beispielen wird das erfindungsgemäße Verfahren näher beschrieben.

**Beispiele**

Die Polymerisation von Ethylen wurde in allen

5

Versuchen in einem rohrförmigen Reaktor mit einem Längen-/Durchmesser-Verhältnis von etwa 20 000 durchgeführt. Zur Abführung der Polymerisationswärme wurden die Rohrwände von außen mit Wasser gekühlt. Das sauerstoffhaltige Ethylen wurde mit einem Molgewichtsregler versetzt und auf den Reaktionsdruck komprimiert. Von dem Reaktionsgas wurden in allen Beispielen 2 Teile der Einlaßstelle des Reaktors zugeführt und 1 Teil dem Reaktor etwa in der Mitte an einer 2. Zufuhrstelle zugegeben, nachdem sich die Reaktion in der 1. Zone mit einem Temperaturmaximum ausgebildet hatte und die Temperatur des Gemisches schon wieder am Abklingen war. Durch diese Maßnahme bilden sich 2 Reaktionszonen in dem rohrförmigen Reaktor (Zweizonen-Rohrreaktor) aus. In der 1. Reaktionszone wurde dem Gemisch zusätzlich eine Menge von 10 mol ppm tert.-Butylperoxypivalat (bezogen auf das durchgesetzte Ethylen) zudosiert. In der 2. Zone des Reaktors wurde dem Reaktionsgemisch an einer Stelle an der das Temperaturmaximum der sauerstoffinitiierten Reaktion bereits überschritten war, ein weiteres Peroxid (Methylisobutylketonperoxid, verdünnt in Benzin) zudosiert. Das erhaltene Polyethylen wurde in bekannter Weise in den dem Reaktor nachgeschalteten Abscheider vom nicht umgesetzten Ethylen abgetrennt.

## Beispiel 1

Dem oben beschriebenen Reaktor werden bei einem Reaktionsdruck von 2750 bar, gemessen an der 2. Zulaufstelle, gleichzeitig 2 Ethylenströme zugeführt, wobei dem Ethylenstrom an der Einlaßstelle des Reaktors 8,4 mol ppm Sauerstoff und 10,0 mol ppm tert.-Butylperoxipivalat, bezogen auf das Ethylen, und dem Ethylenstrom an der 2. Zulaufstelle 4,2 mol ppm Sauerstoff, bezogen auf die Ethylenmenge, in der 2. Reaktionszone zugesetzt. In der 2. Reaktionszone wird zusätzlich an einer Stelle, an der die Temperatur der sauerstoffinitiierten Reaktion bereits das Maximum überschritten hat und die zwischen der 2. Einlaßstelle und dem Ende des Reaktors liegt, 0,6 mol ppm Methylisobutylketonperoxid zudosiert. Dabei ergibt sich in der 1. Reaktionszone ein Temperaturmaximum von 320°C und in der 2. Reaktionszone ein Temperaturmaximum von 310°C bei der sauerstoffinitiierten Polymerisation und von 300°C bei der mit Methylisobutylketonperoxid initiierten Polymerisation. Als Molekulargewichtsregler wird Propionaldehyd zugesetzt. Die Reglermenge wird so bemessen, daß sich ein Molekulargewicht, entsprechend eines Schmelzindex MFI von 2,0 g/10 min, gemessen nach DIN 53 735, einstellt.

## Vergleichsbeispiel 1

Dem Reaktor gemäß Beispiel werden bei einem Reaktionsdruck von 2750 bar, gemessen an der

6

2. Zulaufstelle, gleichzeitig 2 Ethylenströme zugeführt, wobei dem Ethylenstrom an der Einlaßstelle des Reaktors 8,0 mol ppm Sauerstoff und 10,0 mol ppm tert.-Butylperoxipivalat, bezogen auf das Ethylen, und dem Ethylenstrom an der 2. Zulaufstelle 5,2 mol ppm Sauerstoff, bezogen auf die Ethylenmenge, in der 2. Reaktionszone zugesetzt. Dabei ergibt sich in der 1. Reaktionszone ein Temperaturmaximum von 320°C und in der 2. Reaktionszone ein Temperaturmaximum von 310°C. Als Molekulargewichtsregler wird Propionaldehyd zugesetzt. Die Reglermenge wird so bemessen, daß sich ein Molekulargewicht entsprechend eines Schmelzindex MFI von 2,0 g/10 min, gemessen nach DIN 53 735, einstellt.

## Vergleichsbeispiel 2

Dem oben beschriebenen Reaktor werden bei einem Reaktionsdruck von 2750 bar, gemessen an der 2. Zulaufstelle, gleichzeitig zwei Ethylenströme zugeführt, wobei dem Strom in den Reaktoreinlaß 9,1 mol ppm Luftsauerstoff, bezogen auf das Ethylen, und dem Strom in die 2. Zufuhrstelle 10,8 mol ppm Luftsauerstoff, bezogen auf die Ethylenmenge in der 2. Reaktionszone zugesetzt werden. In der 1. Reaktionszone wird zusätzlich an einer Stelle, an der die Temperatur der sauerstoffinitiierten Polymerisation ein Temperaturmaximum von 235°C überschritten hat, eine Menge von 1,0 mol ppm Methylisobutylketonperoxid in verdünnter Form (Benzin) zudosiert, wodurch sich in der 1. Zone ein zweites Maximum mit 300°C ausbildet.

In der 2. Reaktionszone wird eine Maximaltemperatur von 310°C erreicht. Als Molekulargewichtsregler wird Propionaldehyd zugesetzt. Die Reglermenge wird so bemessen, daß sich ein Molekulargewicht entsprechend eines Schmelzindex MFI von 2,1 g/10 min, gemessen nach DIN 53 735, einstellt.

## Tabelle

| Versuch | Umsatz[1] | Dichte[2] | Streu[3] | Glanz[4] | ME[5] |
|---|---|---|---|---|---|
| Beispiel | 26,5 | 0,9234 | 15 | 125 | 38 |
| Vergleichsbeispiel 1 | 23,8 | 0,9233 | 17 | 118 | 43 |
| Vergleichsbeispiel 2 | 24,8 | 0,9237 | 16 | 120 | 42 |

1) Menge an Polymerisat, bezogen auf die Gesamtethylenmenge, angegeben in Gew.-%

2) Dichte des Polymerisats in g/cm$^3$ nach DIN 53 479

3) Lichtstreuung der Folie in % nach DIN 53 490, vgl. Kunststoffe, Bd. *56* (1969), S. 350 bis 354

4) Glanzwert der Folie in Skalenteilen nach DIN 67 530

5) Memory Effekt als Maß für die Strangaufweitung in %, gemessen in Apparatur nach DIN 53 735 bei konstanter Schergeschwindigkeit

Die Beispiele und Vergleichsbeispiele zeigen die unerwarteten und überraschenden Vorteile des Verfahrens auf. Wie die Tabelle veranschaulicht, kann im erfindungsgemäßen Verfahren der Reaktionsumsatz der Polymerisation deutlich angehoben werden. Gleichzeitig findet man eine Verbesserung der optischen Folieneigenschaften und der Verarbeitbarkeit des Polymerisats.

## Patentansprüche

1. Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Verweilzeiten von 30 bis 120 Sekunden, Drücken von 1500 bis 3000 bar und Temperaturen von 140 bis 350°C in Gegenwart von radikalisch zerfallenden Polymerisationsinitiatoren, indem man dem Polymerisationssystem an dessen Einlaßstelle (A) ein Gemisch aus Ethylen, Sauerstoff, in einer Menge von 0,5 bis 50 mol ppm, bezogen auf die Menge an Ethylen, tert.-Butylperoxipivalat, das in einem inerten Lösungsmittel gelöst ist und in einer Menge von 5 bis 15 mol ppm, bezogen auf die gesamte, dem Polymerisationssystem an dessen Einlaßstelle (A) zugeführte Menge Ethylen, vorliegt, ferner gegebenenfalls Regler und gegebenenfalls Comonomer und an einer zweiten Stelle (B) hinter der Einlaßstelle entlang des Polymerisationssystems, an der die Temperatur der Polymerisationsreaktion bereits das Maximum überschritten hat, ein Gemisch aus Ethylen, Sauerstoff, gegebenenfalls Regler und gegebenenfalls Comonomere zuführt, *dadurch gekennzeichnet,* daß man zusätzlich an einer weiteren Stelle (C) des Polymerisationssystems, an der die Temperatur der sauerstoffinitiierten Reaktion bereits das Maximum überschritten hat, und die zwischen der zweiten Einlaßstelle (B) und dem Ende des Polymerisationssystems liegt, einen organischen Initiator zufügt, dessen Halbwertstemperatur, gemessen in Benzol als Lösungsmittel, über 140°C liegt.

2. Verfahren nach Anspruch 1 *dadurch gekennzeichnet,* daß an der Zuführstelle (C) Methylisobutylketonperoxid zudosiert wird.

## Claims

1. A process for preparing an ethylene polymer by homopolymerization of ethylene or by copolymerization of ethylene with an ethylene-copolymerizable compound in a continuously operated, tubular polymerization system in the course of from 30 to 120 seconds, under from 1500 to 3000 bar and at from 140 to 350°C in the presence of a free radical polymerization initiator by supplying the polymerization system at its inlet point (A) with a mixture of ethylene, oxygen, 0,5 - 50 mol ppm, based on the amount of ethylene, of tert-butyl peroxypivalate, which is dissolved in an inert solvent and is present in an amount of from 5 to 15 mol ppm, based on the total amount of ethylene supplied to the polymerization system at its inlet point (A), regulator if any and comonomer if any, and at a second point (B) downstream of the inlet point along the polymerization system, where the temperature of the polymerization reaction has already exceeded the maximum, with a mixture of ethylene, oxygen, regulator if any and comonomer if any, which comprises adding in addition at a further point (C) of the polymerization system, where the temperature of the oxygen-initiated reaction has already exceeded the maximum and which is between the second inlet point (B) and the endpoint of the polymerization system, an organic initiator whose half-value temperature, measured in benzene as solvent, is above 140°C.

2. A process as claimed in claim 1, wherein methyl isobutyl ketone peroxide is metered in at feed point (C).

## Revendications

1. Procédé de préparation de polymères d'éthylène par homopolymérisation d'éthylène ou copolymérisation d'éthylène avec des composés copolymérisables avec celui-ci, dans un système de polymérisation tubulaire fonctionnant en continu, avec des temps de séjour de 30 à 120s, des pressions de 1500 à 3000 bar et des températures de 140 à 350°C en présence d'agents d'amorçage de polymérisation à décomposition radicalaire, dans lequel on introduit dans le système réactionnel, en son point d'entrée (A), un mélange d'éthylène, d'oxygène, à raison de 0,5 à 50 ppm en moles par rapport à la quantité d'éthylène, de peroxypivalate de tert-butyle qui est dissous dans un solvant inerte et est présent à raison de 5 à 15 ppm en moles par rapport à la quantité totale d'éthylène introduite dans le système de polymérisation en ce point d'entrée (A), en plus éventuellement de régulateurs et éventuellement de comonomère, et en un deuxième point d'entrée (B) situé au-delà du point d'entrée le long du système de polymérisation, auquel la température de la réaction de polymérisation a déjà atteint le maximum, un mélange d'éthylène, d'oxygène, éventuellement de régulateurs et éventuellement de comonomères, *caractérisé en ce* qu'on introduit en outre en un autre point (C) du système de polymérisation, auquel la température de la réaction amorcée par l'oxygène a déjà atteint le maximum et qui se trouve entre le deuxième point d'entrée (B) et l'extrémité du système ou polymérisation, un agent d'amorçage organique dont la température de demiréaction mesurée dans le benzène comme solvant se situe au-dessus de 140°C.

2. Procédé selon la revendication 1, *caractérisé en ce* qu'on introduit de façon dosée au point d'entrée (C) du peroxyde de méthylisobutylcétone.